# EUROPÄISCHE PATENTANMELDUNG

(11) **EP 2 088 298 A2**
(43) Veröffentlichungstag der Anmeldung: **12.08.2009**
(21) Anmeldenummer: 09151580.9
(22) Anmeldetag: 29.01.2009
(51) Int. Cl.: F01P 7/16, F01N 5/02, F02B 29/04

(54) **Verfahren zur Steuerung einer Kraftfahrzeug-Verbrennungsmotoranordnung**

(30) Priorität: 11.02.2008 DE 102008008494
(71) Anmelder: Pierburg GmbH, 41460 Neuss (DE)
(72) Erfinder: Kühnel, Hans-Ulrich, 41239, Mönchengladbach (DE); Sanders, Michael, 41564, Kaarst (DE)
(74) Vertreter: Patentanwälte ter Smitten

(57) **Zusammenfassung**

Die Erfindung bezieht sich auf ein Verfahren zur Steuerung einer Kraftfahrzeug-Verbrennungsmotor-Anordnung 50 mit einem Verbrennungsmotor 1 mit einem Ladelufteinlass 94 und einem Abgas-Auslass 95, einem Kühlmittelkreislauf 58 mit einem Kühlmittel-Temperatursensor 74 und einem Steuerelement 32, 33 zur bedarfsweisen Steuerung der Kühlung des Verbrennungsmotors 1. Ferner weist die Anordnung einen mit dem Auslass 95 verbundenen Abgaskatalysator 8 und einen Abgastemperatur-Sensor 9 vor dem Abgaskatalysator 8, einen Ladeluft-Auflader 64 mit einer Antriebsturbine 12 und einen Verdichter 3, einen geregelten Ladeluftkühler 38 zwischen dem Verdichter und dem Einlass 94, wobei dem Ladeluftkühler ein Bypass 52 mit einem Bypass-Ventil 35 zugeordnet ist und vor dem Ladeluftkühler 38 ein Ladeluft-Temperatursensor 36 angeordnet ist, und einen Abgas-Motorschmiermittel-Wärmetauscher 21 mit einem ihm zugeordneten Abgas-Steuerventil 22 zur Steuerung des Abgasstromes durch den Wärmetauscher 21 auf. Das erfindungsgemäße Verfahren weist die folgenden Verfahrensschritte auf:
Bestimmung der Kühlmittel-Temperatur mit dem Kühlmittel-Temperatursensor 74, der Ladelufttemperatur mit dem Ladelufttemperatur-Sensor 36 und der Abgastemperatur mit dem Abgastemperatur-Sensor 9,
wenn die Kühlmittel-Temperatur unter einem festgelegten Grenzwert von über 70 °C, die Abgastemperatur unter einem festgelegten Grenzwert von über 200 °C und die Ladelufttemperatur unter einem festgelegten Grenzwert von über 60 °C liegt, die eine frühe Warmlaufphase definieren:
Schließen des Kühlmittelkreislaufes 58 durch Betätigung des Kühlmittelkreislauf-Steuerelementes 32, 33,
Öffnen des Ladeluft-Bypass 52 durch Öffnen des Bypass-Ventils 35, und
Öffnen des Steuer-Ventils 22 des Abgas-Motorschmiermittel-Wärmetauschers 21 zum Erwärmen des Motorschmiermittels.

Während der frühen Warmlaufphase wird die Ladeluft über den Ladeluft-Bypass an dem Ladeluftkühler vorbeigeführt. Ferner wird der Kühlmittelkreislauf außer Betrieb gesetzt. Gleichzeitig wird während dieser Phase das Motorschmiermittel aktiv durch das Abgas erwärmt. Hierdurch werden die mechanischen Motor-Reibungsverluste möglichst schnell reduziert, wodurch wiederum der Kraftstoffverbrauch und die Schadstoffemissionen verringert werden.

## Beschreibung

Die Erfindung bezieht sich auf ein Verfahren zur Steuerung einer Kraftfahrzeug-Verbrennungsmotor-Anordnung.

Moderne Verbrennungsmotor-Anordnungen weisen neben dem Verbrennungsmotor und einem Kühlmittelkreislauf mit einem Steuerelement zur bedarfsweisen Kühlmittelstrom-Steuerung zur Kühlung des Verbrennungsmotors weitere Aggregate und Nebenaggregate auf, die verschiedene Funktionen haben.

Sowohl bei Benzin- als auch bei Diesel-Verbrennungsmotoren wird in aller Regel ein Ladeluft-Auflader mit einer Antriebsturbine im Abgasstrom und einem Verdichter auf der Ladeluftseite eingesetzt. Ferner ist zur Abgasreinigung sowohl bei Diesel- als auch bei Benzin-Verbrennungsmotoren ein Abgaskatalysator vorgesehen, dem vor dem Einlass des Abgaskatalysators ein Abgastemperatur-Sensor zugeordnet ist. Zur Verbesserung des Wirkungsgrades ist zwischen dem Verdichter des Ladeluft-Aufladers und dem Ladeluft-Einlass des Verbrennungsmotors ein Ladeluftkühler angeordnet, der die Ladeluft bei Bedarf kühlt. Zur Steuerung der Kühlung der Ladeluft in dem Ladeluftkühler ist dem Ladeluftkühler ein Bypass mit einem Bypass-Ventil zugeordnet. Zur Erfassung der Regelgröße, nämlich der Ladeluft-Temperatur, ist vor dem Ladeluftkühler ein Ladeluft-Temperatursensor angeordnet. Zur schnelleren Erwärmung des Motorschmiermittels ist ein Abgas-Motorschmiermittel-Wärmetauscher vorgesehen, dem ein Steuerventil zur Steuerung der Erwärmung des Motorschmiermittels in dem Wärmetauscher zugeordnet ist.

Ein wichtiges Ziel bei der Optimierung von Verbrennungsmotor-Anordnungen bzw. den Steuerungsverfahren zur Steuerung der Verbrennungsmotor-Anordnungen von Kraftfahrzeugen ist neben der Verbrauchsverringerung eine Verringerung der Schadstoffemissionen. Die mit Abstand emissionsreichste Phase ist die Phase zwischen dem Anlassen des kalten Verbrennungsmotors und dem Erreichen der Betriebstemperatur des Verbrennungsmotors und aller beteiligten Aggregate und Fluide. Bei den Verbrennungsmotor-Anordnungen nach dem Stand der Technik wird dieser Forderung durch entsprechende Steuerung und Regelung der Verbrennungsmotoranordnung Rechnung getragen. Allerdings beziehen sich die bekannten Steuerungen und Regelungen für die Verbrennungsmotor-Anordnung im wesentlichen auf die Verbrauchs- und Schadstoffoptimierung bei Betriebstemperatur.

Aufgabe der Erfindung ist es, ein Steuerungsverfahren für eine Kraftfahrzeug-Verbrennungsmotoranordnung zu schaffen, das für eine Verringerung der Schadstoffemissionen sorgt, solange die Verbrennungsmotoranordnung ihre Betriebstemperatur nicht erreicht hat.

Die Aufgabe wird erfindungsgemäß dadurch gelöst, dass anhand der von dem Kühlmittel-Temperatursensor gemessenen Kühlmittel-Temperatur, der von dem Ladelufttemperatur-Sensor gemessenen Ladelufttemperatur und der von dem Abgastemperatur-Sensor gemessenen Abgastemperatur eine frühe Warmlaufphase detektiert wird. Diese frühe Warmlaufphase liegt vor, solange die Kühlmittel-Temperatur unter einem festgelegten konstanten Grenzwert von über 70°C, die Abgastemperatur über einem festgelegten konstanten Grenzwert von über 200 °C und die Ladelufttemperatur unter einem konstanten Grenzwert von mindestens 60°C liegt. Die frühe Warmlaufphase liegt also nicht vor, wenn die Kühlmittel-Temperatur oberhalb des Kühlmitteltemperatur-Grenzwertes, die Abgastemperatur unterhalb des festgelegten Abgastemperatur-Grenzwertes oder aber die Ladelufttemperatur oberhalb ihres festgelegten Grenzwertes liegt.

Alternativ zu der Bestimmung und der Auswertung der Abgastemperatur zum Feststellen der Aktivität des Abgaskatalysators kann diese auch mit zwei λ-Sonden festgestellt werden, die vor und hinter dem Abgaskatalysator angeordnet sind. Wenn die Differenz des durch die λ-Sonden bestimmten Sauerstoff-Gehaltes einen bestimmten Grenzwert überschreitet, wird angenommen, dass der Abgaskatalysator arbeitet, was Voraussetzung für die frühe Warmlaufphase ist. Statt der die Abgastemperatur betreffenden Bedingung wäre die Bedingung in diesem Fall, dass die von den beiden λ-Sonden vor und hinter dem Abgaskatalysator bestimmte Differenz der Sauerstoffkonzentrationen einen Grenzwert überschreitet, der zumindest eine beginnende abgasreinigende Wirkung des Abgaskatalysators anzeigt. In jedem Fall ist die Aktivität bzw. die Nicht-Aktivität des Abgaskatalysators festzustellen.

Während der frühen Warmlaufphase werden folgende Verfahrensschritte durchgeführt:
Der Kühlmittelkreislauf zur Kühlung des Verbrennungsmotors wird durch Betätigung des Kühlmittelkreislauf-Steuerelementes geschlossen. Hierdurch wird die Kühlmittel-Zirkulation weitgehend gestoppt. Das Kühlmittel-Steuerelement kann eine Kühlmittelpumpe, kann jedoch auch ein Kühlmittel-Ventil oder -Thermostat sein. Durch Schließen des Kühlmittelkreislaufes wird dem Verbrennungsmotor und damit dem Abgas möglichst wenig Wärme entzogen. Das Abgas ist während der frühen Warmlaufphase der einzige Wärmeträger. Um die Abgas-Wärme in dieser Phase gezielt einsetzen zu können, wird die größte Wärmesenke, nämlich der Kühlmittelkreislauf, außer Betrieb gesetzt.

Eine weitere Wärmesenke stellt für die Ladeluft der Ladeluftkühler dar. Daher wird während der frühen Warmlaufphase der Ladeluft-Bypass durch Öffnen des Ladeluft-Bypass-Ventils geöffnet. Die Ladeluft fließt nicht durch den Ladeluftkühler, sondern an dem Ladeluftkühler vorbei. Ferner wird während der frühen Warmlaufphase bevorzugt das Steuerventil des Abgas-Motorschmiermittel-Wärmetauschers geöffnet, so dass in dieser Phase gezielt das Motorschmiermittel erwärmt wird. Hierdurch wird sicher gestellt, dass das Motorschmiermittel möglichst frühzeitig erwärmt wird, bevor der Verbrennungsmotor, die Nebenaggregate und die Fluide die Betriebstemperatur erreicht haben. Hierdurch werden die Reibungsverluste innerhalb des Verbrennungsmotors in der frühen Warmlaufphase nach einem Kaltstart schnellstmöglich reduziert. Durch Verringerung der Reibungsverluste wird der Kraftstoff-Verbrauch entsprechend verringert, wodurch wiederum die Schadstoffemissionen während der Warmlaufphase schnellstmöglich reduziert werden.

Der Beginn der frühen Warmlaufphase wird dann eingeleitet, wenn die Abgastemperatur einen konstanten Grenzwert von über 200 °C überschreitet. Eine derartige Schwelle zum Einleiten der frühen Warmlaufphase und der damit verbundenen Verfahrensschritte ist deshalb sinnvoll, weil bei einer Abgastemperatur unterhalb des Grenzwertes von über 200 °C das Abgas nur relativ wenig Wärmemenge aufweist, um Motorschmiermittel von mehreren Litern nennenswert erwärmen zu können. Das Abgas mit einer Temperatur unterhalb der festgelegten Grenzwert-Temperatur ist daher besser geeignet, zur schnellstmöglichen Verringerung der Abgas-Emissionen möglichst ungekühlt dem Abgaskatalysator zugeführt zu werden, damit dieser schnellstmöglich seine Betriebstemperatur erreicht.

Vorzugsweise liegt der Abgastemperatur-Grenzwert über 270 °C und liegt der Ladelufttemperatur-Grenzwert über 70 °C. Herkömmliche Abgaskatalysatoren beginnen unter Einsatz weiterer Maßnahmen bei Eigentemperaturen von 270 - 280°C zu arbeiten. Erst wenn diese Temperatur erreicht ist, ist es sinnvoll, dem in dieser Phase einzigen Wärmeträger, nämlich dem Abgas, weitere Wärme zur Erwärmung des Motorschmiermittels zu entziehen. Sobald die Ladelufttemperatur einen Grenzwert von über 70 °C überschreitet, was beispielsweise durch die Temperaturerhöhung der Ladeluft bei der Verdichtung im Ladeluft-Verdichter bewirkt wird, muss die Ladeluft durch Schließen des Ladeluft-Bypass-Ventils des Ladeluftkühlers gekühlt werden.

Gemäß einer bevorzugten Ausgestaltung ist bei einer Verbrennungsmotoranordnung, die über einen mit einem Kühler kühlbaren Abgaskrümmer verfügt, dem ein Kühlerventil zur Steuerung der Kühlung des Abgaskrümmers zugeordnet ist, während der frühen Warmlaufphase vorgesehen, das Kühlerventil des Abgaskrümmers zu schließen, so dass der Abgaskrümmer nicht aktiv gekühlt wird. Auch die Kühlung des kühlbaren Abgaskrümmers wird während der frühen Warmlaufphase also abgeschaltet.

Vorzugsweise ist bei der Verbrennungsmotor-Anordnung ferner ein Abgas-Getriebeschmiermittel-Wärmetauscher mit einem Steuerventil zur Steuerung der Erwärmung des Getriebeschmiermittels durch Abgas vorgesehen. Bei einer derartigen Verbrennungsmotor-Anordnung ist während der frühen Warmlaufphase vorgesehen, das Steuerventil des Abgas-Getriebeschmiermittel-Wärmetauschers zu öffnen, so dass das Getriebeschmiermittel während der frühen Warmlaufphase durch Abgas erwärmt wird. Insbesondere bei Automatik-Getrieben ist die Getriebeschmiermittel-Menge mit 10 Litern und mehr so groß, dass sie eine hohe absolute Wärmekapazität aufweist. Ohne einen Getriebeschmiermittel-Wärmetauscher erfolgt die Erwärmung durch Reibung und Motorwärme nur relativ langsam. Insbesondere bei Automatik-Getrieben ist kaltes Getriebeschmiermittel, das im kalten Zustand relativ zähflüssig ist, verantwortlich für relativ hohe Antriebsverluste. Durch die aktive Erwärmung des Getriebeschmiermittels in der frühen Warmlaufphase werden die mechanischen Antriebsverluste nach einem Kaltstart des Verbrennungsmotors zeitlich erheblich reduziert, so dass auch der hierdurch verursachte Mehrverbrauch und die hierdurch wiederum verursachten Schadstoffemissionen entsprechend verringert werden.

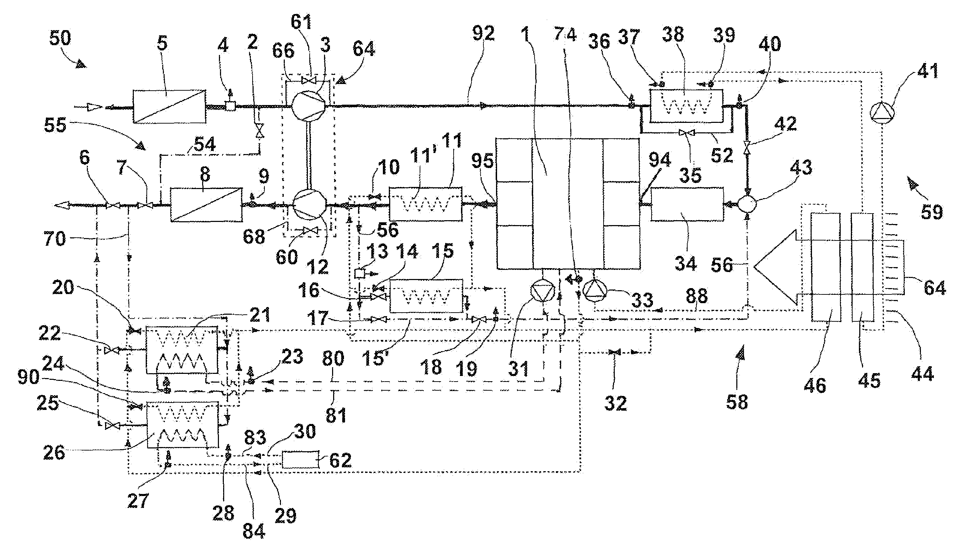

Die Zeichnung zeigt eine schematische Darstellung einer Verbrennungsmotor-Anordnung.

In der Figur ist schematisch eine komplexe Verbrennungsmotor-Anordnung 50 dargestellt. In der Anordnung 50 sind alle wesentlichen Aggregate dargestellt, die um den Verbrennungsmotor 1 herum mit der Ladeluft, dem Abgas, mehreren Kühlmittelkreisläufen sowie zwei Ölkreisläufen zu tun haben.

Frische Ladeluft wird durch einen Luftfilter 5 angesaugt und passiert anschließend einen Luftmassenmesser 4. Die angesaugte Ladeluft tritt anschließend in einen Ladeluft- Auflader 64 ein, in dem sie in einem Verdichter 3 ggf. verdichtet wird. Die Ladeluft strömt anschließend zu einem mit einem Kühlmittel gekühlten Ladeluftkühler 38, dem ein Bypass 52 mit einem Bypass-Ventil 35 zugeordnet ist. Von dort strömt die Ladeluft durch das Gas-Steuerventil 42 in Form einer Drosselklappe zu einem Mischer 43, in dem die Ladeluft ggf. gemischt wird mit zurückgeführtem Abgas aus der Hochdruck- Abgasrückführung .

Von dem Mischer 43 gelangt die Ladeluft über das Saugrohr 34 und durch einen Ladeluft-Einlass 94 in den Verbrennungsmotor 1. Dort wird die Ladeluft mit Kraftstoff angereichert, und wird das auf diese Weise gewonnene Gemisch gezündet. Das dabei entstehende Abgas strömt aus einem Abgas-Auslass 95 aus dem Verbrennungsmotor 1 aus.

Das aus dem Auslass 95 austretende Abgas wird in einem wassergekühlten Abgaskrümmer 11 gekühlt und strömt mit seinem Hauptstrom weiter zu einer Antriebsturbine 12 des Ladeluft-Aufladers 64. Die Antriebsturbine 12 treibt den Verdichter 3 an. Der Antriebsturbine 12 ist ein Bypass 68 mit einem Bypass-Ventil 60 und der Verdichter 3 ist ein Bypass 66 mit einem Bypass-Ventil 61 zugeordnet. Von dem Ladeluft- Auflader 64 kommend passiert das Abgas einen Abgastemperatur-Sensor 9, der kurz vor einem Abgaskatalysator 8 angeordnet ist. Aus dem Abgaskatalysator 8 strömt das Abgas durch ein erstes Gas-Steuerungsventil 7 und ein zweites Gas-Steuerungsventil 6 in einen nicht dargestellten Auspuff. Der hier dargestellte Strom des Gases ist der Hauptgastrom vom Einlass des Luftfilters bis zum Auslass in einen Schalldämpfer bzw. den Auspuff.

Dieser Gas-Hauptstrom weist drei Verzweigungen auf, nämlich eine Niederdruck-Abgasrückführung, eine Hochdruck-Abgasrückführung sowie ein Abzweig für die Versorgung von zwei Drei-Wege-Wärmetauschern 21, 26.

Die Niederdruck-Abgasrückführung wird von einer Leitung 54 gebildet, die im Abgaszweig zwischen dem Abgaskatalysator 8 und dem ersten Gas-Steuerventil 7 abzweigt und in ihrem Verlauf ein Abgasrückführungs-Steuerventil 2 aufweist. Diese Abgasrückführungs-Leitung 54 mündet in den Ladeluftstrang vor dem Ladeluft-Auflader 64.

Ferner ist eine Hochdruck-Abgasrückführung vorgesehen, wobei die Hochdruck-Abgasrückführungs-Leitung 56 auf der Abgasseite zwischen dem wassergekühlten Abgaskrümmer 11 und dem Ladeluft- Auflader 64 abzweigt. Nach dem Abzweig ist im Verlauf der Leitung 56 ein Abgasmassen- und Temperatursensor 13 angeordnet, der die Abgasmasse und die Abgastemperatur an dieser Stelle detektiert. Der Abgasstrom strömt anschließend durch einen Hochdruck-Abgasrückführungs-Kühler 15, dem ein Gas-Steuerventil 16 vorgeschaltet ist. Ferner ist parallel zu dem Kühler 15 ein Bypass 15' vorgesehen, durch den das Abgas unter Umgehung des Kühlers 15 strömen kann, wenn die betreffenden Gas-Steuerventile 16, 17, 18 entsprechend geschlossen bzw. geöffnet sind. In dem Hochdruck-Abgasrückführungs-Kühler 15 kann das durch die Leitung 56 zurückgeführte Abgas bei Bedarf gekühlt werden, um die thermische Belastung des Verbrennungsmotors 1 und der im Abgas-Hauptstrom liegenden Aggregate zu reduzieren, und Stickoxide in dem Abgas zu verringern.

In Strömungsrichtung hinter dem Kühler 15 ist im Verlauf der Leitung 56 ein Hochdruck-Abgasrückführungs-Kühler-Sensor 19 angeordnet, mit dessen Hilfe die Kühlleistung des Abgasrückführungs-Kühlers 15 geregelt werden kann. Das Abgas strömt von dort aus in den Mischer 43, in dem die Ladeluft mit dem Abgas aus der Hochdruck-Abgasrückführungsleitung 56 gemischt wird.

Eine weitere Abgas-Leitung 70 zweigt im Abgas-Hauptstrom zwischen dem ersten Gas-Steuerventil 7 und dem zweiten Gas-Steuerventil 6 zu den zwei Drei-Wege-Wärmetauschern 21, 26 ab. In dem ersten Drei-Wege-Wärmetauscher 21 kann mit Hilfe des warmen Abgases ein Zielmedium erwärmt und mit Hilfe des ebenfalls eingespeisten Kühlmittels dasselbe Zielmedium bei Bedarf gekühlt werden. Beide Drei-Wege-Wärmetauscher weisen daher neben ihren Abgas-Einlässen auch Einlässe für das Kühlmittel auf. Der erste Drei-Wege-Wärmetauscher ist über eine Schmiermittel-Zuleitung 80 und -Ableitung 81 verbunden mit entsprechenden Schmiermittel-Anschlüssen des Verbrennungsmotors 1. In dem ersten Drei-Wege-Wärmetauscher 21 wird also das Verbrennungsmotor-Schmiermittel bei Bedarf durch das Kühlwasser gekühlt bzw. durch das Abgas erwärmt.

Der zweite Drei-Wege-Wärmetauscher 26 ist über eine Schmiermittel-Zuleitung 83 und eine Schmiermittel-Ableitung 84 mit einem Getriebe 62 verbunden. Durch die Schmiermittel- Zuleitung und -Ableitung 83, 84 und den zugeordneten Drei-Wege-Wärmetauscher 26 kann das Getriebe-Schmiermittel bei Bedarf gekühlt oder erwärmt werden. Dies ist insbesondere bei Automatik- Getrieben sinnvoll, in denen die Schmiermittelmenge häufig 10 Liter und mehr betragen kann, und von denen bei geringer Schmiermittel- Temperatur ein hoher Teil der Antriebsleistung absorbiert wird, und bei zu hoher Temperatur zuviel Schlupf auftritt.

Vorliegend sind zwei Kühlmittelkreisläufe vorgesehen, nämlich ein erster Hochtemperatur-Kühlmittelkreislauf 58 und ein zweiter Niedertemperatur-Kreislauf 59. Der Niedertemperatur-Kreislauf 59 dient der Kühlung des Ladeluftkühlers 38 und weist hierzu einen Niedertemperatur-Kühler 45 und eine Niedertemperatur-Kühlmittelpumpe 41 auf.

Der Hochtemperatur-Kühlmittelkreislauf 58 weist einen Kühler 46, eine Kühlmittel-Pumpe 33 sowie eine Vielzahl von Leitungen und Ventilen auf. Der Kühlmittel-Hauptstrom läuft vom Kühler 46 aus kommend durch eine Kühlmittel-Leitung 88 zu der Kühlmittel-Pumpe 33, die bei Betrieb das Kühlmittel in den Verbrennungsmotor 1 pumpt. Das aus dem Verbrennungsmotor 1 ausströmende Kühlmittel strömt an einem Kühlmittel-Temperatursensor 74 vorbei durch ein Kühlmittel -Steuerventil 32 zurück zu dem Kühler 46.

Zwischen dem Kühlmittel- Auslass des Verbrennungsmotors 1 und dem Kühlmittel-Steuerventil 32 zweigen mehrere Kühlmittel-Leitungen zu dem Abgaskrümmer-Kühler 11, dem Hochdruck-Abgasrückführungs-Kühler 15, zu dem ersten Drei-Wege-Wärmetauscher 21 und zu dem zweiten Drei-Wege-Wärmetauscher 26 ab, um von dort aus jeweils in den Kühlmittel-Kühler 46 zurückzuströmen.

Die Kühlmittelströme werden mit Hilfe von Steuerventilen 10, 14, 20, 90 dem Bedarf entsprechend gesteuert bzw. geregelt.

Im Verlauf der Schmiermittel-Leitungen 80, 81, 83, 84 sind jeweils vor und hinter dem Drei-Wege-Wärmetauschern 21, 26 Temperatursensoren 22, 24, 27, 28 angeordnet, mit deren Hilfe die betreffende Schmiermittel-Temperatur geregelt werden kann.

Die beiden Kühler 45, 46 der beiden Kühlmittel-Kreisläufe werden durch von außen einströmende Kühlluft 64 gekühlt, die dabei durch eine verschließbare Kühlluft-Jalousie 44 hindurch tritt.

Die frühe Warmlaufphase des Verbrennungsmotors (1) läuft wie folgt ab:
Von einer nicht dargestellten zentralen Motorsteuerung werden unter anderem die Signale des Kühlmittel- Temperatursensors 74, des Ladeluft-Temperatursensors 36, der dem Ladeluftkühler 38 zugeordnet ist, und des Abgastemperatur-Sensors 9 vor dem Abgaskatalysator 8 ständig überwacht. Wenn die Kühlmittel- Temperatur unter einem festgelegten konstanten Grenzwert von über 70°C, die Abgastemperatur über einen festgelegten Grenzwert von 280 °C und die Ladelufttemperatur unterhalb eines Grenzwertes von 80 °C liegt, liegt für die Motorsteuerung eine frühe Warmlaufphase vor, in der bestimmte Verfahrensschritte durchgeführt werden.

In dieser frühen Warmlaufphase ist die Abgastemperatur oberhalb der Betriebstemperatur des Abgaskatalysators 8. Der Abgaskatalysator 8 arbeitet bereits effektiv und reinigt auf diese Weise das austretende Abgas im hohen Maße von Schadstoffen. Im übrigen sind alle Aggregate und Fluide der Anordnung 50 noch nicht auf Betriebstemperatur.

In der frühen Warmlaufphase bleibt der Kühlmittelkreislauf 58 durch Betätigung der betreffenden Kühlmittelkreislauf-Steuerelemente 32, 33 geschlossen. Eine Kühlmittel-Zirkulation, also eine aktive Kühlung des Verbrennungsmotors 1 und anderer an dem Kühlkreislauf 58 angeschlossener Aggregate, findet in dieser frühen Warmlaufphase nicht statt.

Ferner wird in der frühen Warmlaufphase das Bypass-Ventil 35, das den Ladeluft-Bypass steuert, geöffnet. Die Ladeluft passiert also den Ladeluftkühler 38, so dass die Ladeluft im Ladeluftkühler 38 nicht gekühlt wird.

Ferner wird in der frühen Warmlaufphase durch die Motorsteuerung das Steuerventil 22 des Abgas-Motorschmiermittel-Wärmetauschers 21 geöffnet, um in der frühen Warmlaufphase bereits das Motorschmiermittel aktiv mit Hilfe der Wärme des Abgases zu erwärmen. Hierdurch wird die durch das noch nicht auf Betriebstemperatur erwärmte Motorschmiermittel erhöhte Reibung innerhalb des Verbrennungsmotors 1 schnell verringert, da das Motorschmiermittel nunmehr bevorzugt und gezielt bis zum Erreichen seiner Betriebstemperatur erwärmt wird.

Durch das schnellere Erwärmen des Motorschmiermittels und die daraus resultierende schnellere Verringerung der Reibung innerhalb des Verbrennungsmotors 1 wird wiederum die mechanische Verlustleistung innerhalb des Verbrennungsmotors 1 reduziert, so dass wiederum der Kraftstoffverbrauch und damit ebenfalls die Schadstoffemissionen reduziert werden.

In der frühen Warmlaufphase wird ferner das Kühlerventil 10 des Abgaskrümmer-Kühlers 11' geschlossen, so das auch der Abgaskrümmer 11 in der frühen Warmlaufphase nicht aktiv gekühlt wird.

Gleichzeitig kann, muss jedoch nicht, in der frühen Warmlaufphase der Getriebeschmiermittel-Wärmetauscher 26 durch entsprechendes Öffnen des Steuerventils 25 in Betrieb genommen werden, so dass in dieser Phase auch das Getriebeschmiermittel aktiv und gezielt erwärmt und auf diese Weise schneller auf Betriebstemperatur gebracht wird. Eine aktive Erwärmung des Getriebeschmiermittels in der frühen Warmlaufphase ist insbesondere dann von Bedeutung, wenn das Fahrzeug-Getriebe ein automatisches Getriebe ist. Ein automatisches Getriebe weist bei Getriebeschmiermittel-Temperaturen unterhalb der Betriebstemperatur erhebliche Reibungsverluste auf. Unter Getriebeschmiermittel ist vorliegend auch das Transmissionsfluid eines automatischen Fahrzeug-Getriebes zu verstehen.

Die vorliegende Darstellung einer Verbrennungsmotor-Anordnung 50 ist exemplarisch. Die Abgasrückführung kann als Hochdruck-Abgasrückführung, als Niederdruck-Abgasrückführung oder als kombinierte Hochdruck-Niederdruck-Abgasrückführung ausgebildet sein.

Für den Fall einer Hochdruck-Abgasrückführung ist während der frühen Warmlaufphase auch der Abgasrückführungs-Kühler 15 abgeschaltet, d. h. das rückgeführte Abgas wird nicht gekühlt.

Der Abgas-Motorschmiermittel-Wärmetauscher kann zusammen mit dem Abgasrückführungskühler 15 in einem einzigen Kombinations-Wärmetauscher kombiniert sein. Die Entnahme des Abgases für den Abgas-Motorschmiermittel-Wärmetauscher muss nicht hinter dem Abgaskatalysator 8 erfolgen, sondern kann auch unmittelbar hinter dem Abgaskrümmer 11 und vor dem Ladeluft-Auflader 64 bzw. seiner Antriebsturbine 12 erfolgen.

Entscheidend ist, dass in der frühen Warmlaufphase das Abgas als einziger Wärmeträger ausschließlich zum Erwärmen des Abgaskatalysators und des Motorschmiermittels genutzt wird. Alle übrigen Wärmesenken für das Abgas sind abgeschaltet, soweit dies möglich und für die Anordnung bzw. den Verbrennungsmotor nicht schädigend ist.

## Patentansprüche

1. Verfahren zur Steuerung einer Kraftfahrzeug-Verbrennungsmotor-Anordnung (50) mit
einem Verbrennungsmotor (1) mit einem Ladeluft-Einlass (94) und einem Abgas- Auslass (95),
einem Kühlmittelkreislauf (58) mit einem Kühlmittel-Temperatursensor (74) und einem Steuerelement (32,33) zur bedarfsweisen Steuerung der Kühlung des Verbrennungsmotors (1),
einem mit dem Auslass (95) verbundenen Abgaskatalysator (8) und einem Abgastemperatur-Sensor (9) vor dem Abgaskatalysator (8),
einem Ladeluft-Auflader (64) mit einer Antriebsturbine (12) und einem Verdichter (3),
einem geregelten Ladeluftkühler (38) zwischen dem Verdichter (3) und dem Einlass (94), wobei dem Ladeluftkühler ein Bypass (52) mit einem Bypass-Ventil (35) zugeordnet ist und vor dem Ladeluftkühler (38) ein Ladeluft-Temperatursensor (36) angeordnet ist, und
einem Abgas-Motorschmiermittel-Wärmetauscher (21) mit einem ihm zugeordneten Abgas-Steuerventil (22) zu Steuerung des Abgasstromes durch den Wärmetauscher (21),
mit den folgenden Verfahrensschritten:
Bestimmung der Kühlmittel-Temperatur mit dem Kühlmittel-Temperatursensor (74), der Ladelufttemperatur mit dem Ladelufttemperatur-Sensor (36) und der Abgastemperatur mit dem Abgastemperatur-Sensor (9), wenn die Kühlmittel-Temperatur unter einem festgelegten Grenzwert von über 70°C, die Abgastemperatur über einem festgelegten Grenzwert von über 200°C und die Ladelufttemperatur unter einem festgelegten Grenzwert von über 60°C liegt, die eine frühe Warmlaufphase definieren:
Schließen des Kühlmittelkreislaufes (58) durch Betätigung des Kühlmittelkreislauf-Steuerelementes (32,33),
Öffnen des Ladeluft- Bypass (52) durch Öffnen des Bypass-Ventils (35), und
Öffnen des Steuerventils (22) des Abgas-Motorschmiermittel-Wärmetauschers (21) zum Erwärmen des Motorschmiermittels.

2. Verfahren zur Steuerung einer Kraftfahrzeug-Verbrennungsmotor-Anordnung (50) nach Anspruch 1, **dadurch gekennzeichnet, dass** der Abgastemperatur-Grenzwert über 270°C und der Ladelufttemperatur- Grenzwert über 70°C liegt.

3. Verfahren zur Steuerung einer Kraftfahrzeug-Verbrennungsmotor-Anordnung (50) nach Anspruch 1 oder 2 mit einem Abgaskrümmer (11) mit einem Kühler (11') und einem Kühlerventil (10), mit dem Verfahrensschritt während der frühen Warmlaufphase:
Schließen des Kühlerventils (10).

4. Verfahren zur Steuerung einer Kraftfahrzeug-Verbrennungsmotor-Anordnung (50) nach einem der Ansprüche 1 bis 3, mit einem Abgas-Getriebeschmiermittel- Wärmetauscher (26) mit einem Steuerventil (25), mit dem Verfahrenschritt während der frühen Warmlaufphase:
Öffnen des Steuerventils des Abgas-Getriebeschmiermittel-Wärmetauschers (26).
